# EUROPEAN PATENT APPLICATION

(11) **EP 4 623 681 A1**
(43) Date of publication of application: **01.10.2025**
(21) Application number: 25157466.1
(22) Date of filing: 12.02.2025
(51) Int. Cl.: A01K 85/01, A01K 85/00

(54) **LURE FOR FISHING**

(30) Priority: 25.03.2024 JP 2024048275; 17.12.2024 JP 2024220461
(71) Applicant: Globeride, Inc., Higashikurume-shi, Tokyo 203-8511 (JP)
(72) Inventor: YAGI, Hiroshi, Higashikurume-shi, 203-8511 (JP)
(74) Representative: Boult Wade Tennant LLP

(57) **Abstract**

A lure for fishing according to one embodiment of the present invention comprises a main body portion (2) having a cavity (11) therein; a weight provided in the cavity of the main body portion and movable in the cavity; and a hollow cover member (9) provided in the cavity of the main body portion, covering the weight from an outer side, and capable of guiding the weight to an inner side, in which the cavity is partially or entirely visually recognizable from an outside, and one or a plurality of reflecting surfaces (6) or reflectors (7) capable of performing specular reflection of light from the outside is provided on an outer surface (9a) of the hollow cover member.

## Description

### BACKGROUND OF THE INVENTION

### 1. TECHNICAL FIELD

The present invention relates to a lure for fishing.

### 2. DESCRIPTION OF THE RELATED ART

In the related art, in lure fishing, artificial baits (lures) imitating baits, such as small fish, are used to catch fish eaters. There are various types of known lures such as Egi lures, spoons, plugs, spinners, jigs, and plastic lures.

As an example of lures, JP H11-075628 A discloses a fish attracting tool such as an artificial bait used in fishing. Particularly, in this fish attracting tool, an object that reflects light rays is sealed together with a liquid in a tool body, producing complex reflected light through the movement of a reflector, and thereby fishing results are improved.

### RELEVANT REFERENCES

### LIST OF RELEVANT PATENT LITERATURE

Patent Literature 1: Japanese Application Publication No. H11-075628

### SUMMARY OF THE INVENTION

Although the fish attracting tool as disclosed in JP H11-075628 A reflects light, the reflected light is weak or the reflected light does not even reach the fish eater depending on angles of light shined on a small piece of the tool from the outside, thus fish attracting effects are not necessarily high, and there is also a problem that space cannot be secured inside the lure for other mechanisms (for example, a center-of-gravity shift system).

An object of an embodiment of the present invention is to provide a lure comprising an attracting unit capable of more reliably attracting fish eaters by providing one or a plurality of reflecting surfaces or reflectors capable of performing specular reflection of external light inside the main body portion of the lure while securing a space for providing other mechanisms (for example, center-of-gravity shift system) inside the main body portion of the lure, reducing attenuation at the time of reflection of the external light, enabling reflection with stronger luminance, and enabling formation of reflected light in various directions. Other objects of the embodiment of the present invention will become apparent by reference to the entire specification.

A lure for fishing according to one embodiment of the present invention comprises a main body portion having a cavity therein; and a hollow cover member provided in the cavity of the main body portion, in which the cavity is partially or entirely visually recognizable from an outside, and one or a plurality of reflecting surfaces or reflectors capable of performing specular reflection of light from the outside is provided on an outer surface of the hollow cover member.

The lure for fishing according to one embodiment of the present invention further comprises a weight in the cavity of the main body portion, and the hollow cover member covers the weight from an outer side of the weight, and is configured to be capable of guiding the weight along an extending direction of the cover member, inside the hollow cover member along the extending direction.

In the lure for fishing according to one embodiment of the present invention, a shaft member is provided inside the cover member along the extending direction of the cover member, and the shaft member is configured to be capable of guiding the weight by being inserted through the weight.

In the lure for fishing according to one embodiment of the present invention, the shaft member is provided to extend along a central axis to be concentric with the cover member and the weight.

In the lure for fishing according to one embodiment of the present invention, the one or the plurality of reflecting surfaces or reflectors capable of performing specular reflection of light from the outside is provided on at least one of an outer surface of the main body portion or an inner surface of the main body portion.

In the lure for fishing according to one embodiment of the present invention, the cover member is formed in a columnar shape, a polygonal columnar shape, an arch shape, or a dome shape of which an inside is formed hollow.

In the lure for fishing according to one embodiment of the present invention, the one or the plurality of reflectors is provided on the outer surface of the cover member along a circumferential direction of the cover member, and in a case where the plurality of reflectors is provided, the reflectors are provided at intervals from each other along the circumferential direction of the cover member.

In the lure for fishing according to one embodiment of the present invention, the one or the plurality of reflectors is provided on the outer surface of the cover member, and the reflector is provided to protrude outward from the cover member.

In the lure for fishing according to one embodiment of the present invention, the cover member is formed linearly along an extending direction of the cover member, or at least a part of the cover member is formed to be curved.

In the lure for fishing according to one embodiment of the present invention, in a case where the one or the plurality of reflecting surfaces or reflectors is provided on the inner surface of the main body portion, the one or the plurality of reflecting surfaces or reflectors is formed by vapor deposition, plating, foil film, hologram sheet, metal adhesion, resin adhesion, or glass sheet adhesion.

In the lure for fishing according to one embodiment of the present invention, the main body portion is formed by resin or metal.

According to various embodiments of the present invention, it is possible to provide a lure comprising an attracting unit capable of more reliably attracting fish eaters by providing one or a plurality of reflecting surfaces or reflectors capable of performing specular reflection of external light inside the main body portion of the lure while securing a space for providing other mechanisms (for example, center-of-gravity shift system) inside the main body portion of the lure, reducing attenuation at the time of reflection of the external light, enabling reflection with stronger luminance, and enabling formation of reflected light in various directions.

### BRIEF DESCRIPTION OF THE DRAWINGS

FIG. 1 is a schematic diagram describing a structure of a lure for fishing according to one embodiment of the present invention;
FIG. 2 is a schematic diagram describing a structure of a lure for fishing according to one embodiment of the present invention;
FIG. 3 is a schematic diagram describing a structure of a lure for fishing according to one embodiment of the present invention;
FIG. 4 is a schematic diagram describing a structure of a main body portion of a lure for fishing according to one embodiment of the present invention;
FIG. 5A is a cross-sectional view of a lure for fishing according to one embodiment of the present invention, and FIG. 5B is a cross-sectional view of a lure for fishing according to one embodiment of the present invention;
FIGS. 6A to 6D are diagrams describing a shape of a cover member of a lure for fishing according to one embodiment of the present invention;
FIG. 7 is a diagram describing a cover member of a lure for fishing according to one embodiment of the present invention;
FIG. 8A is a diagram describing a cover member of a lure for fishing according to one embodiment of the present invention, and FIG. 8B is a diagram describing a cover member of a lure for fishing according to one embodiment of the present invention;
FIG. 9 is a diagram describing a structure of a lure for fishing according to another embodiment of the present invention;
FIG. 10 is a schematic diagram describing a structure of a lure for fishing according to another embodiment of the present invention; and
FIG. 11 is a diagram describing a shape of a cover member of a lure for fishing according to another embodiment of the present invention.

### DETAILED DESCRIPTION

Hereinafter, embodiments of a lure for fishing according to the present invention will be specifically described with reference to the attached drawings. Components that are common in a plurality of drawings are denoted by the same reference signs throughout the plurality of drawings. It should be noted that each drawing is not necessarily drawn to an accurate scale for convenience of description.

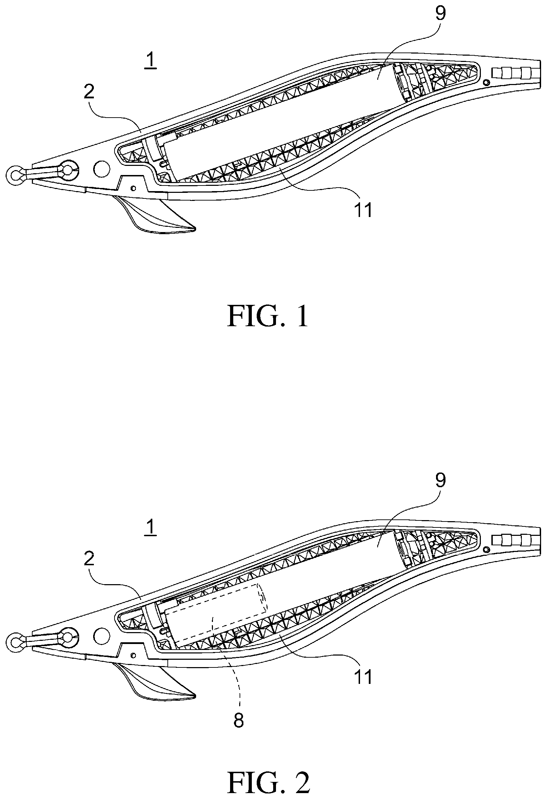

Next, a lure 1 for fishing according to one embodiment of the present invention will be described with reference to FIGS. 1 and 2. As illustrated in FIG. 1, the lure 1 for fishing according to one embodiment of the present invention comprises a main body portion 2 having a cavity 11 therein, and a hollow cover member 9 provided in the cavity 11 of the main body portion 2. The cavity 11 is partially or entirely visually recognizable from the outside. One or a plurality of reflecting surfaces 6 (an aspect in FIG. 1) or reflectors 7 capable of performing specular reflection of light from the outside are provided on an outer surface 9a of the hollow cover member 9. In addition, as illustrated in FIG. 2, the lure 1 for fishing according to one embodiment of the present invention further comprises a weight 8 in the cavity 11 of the main body portion 2, and the hollow cover member 9 is configured to cover the weight 8 from the outer side (outer side in a radial direction) thereof, and to be capable of guiding the weight 8 along an extending direction of the cover member 9 through the inner side (inner side in the radial direction) of the hollow cover member 9. Here, in a case where one or a plurality of reflecting surfaces 6 capable of performing specular reflection of light from the outside is provided on the outer surface 9a of the hollow cover member 9, the outer surface 9a itself may be formed as a reflecting surface capable of performing specular reflection, or another member (another member having a reflecting surface on one surface) having a reflecting surface capable of performing specular reflection may be attached to the outer surface 9a (the same applies throughout the present specification).

With the lure 1 for fishing according to one embodiment of the present invention, it is possible to provide the lure comprising an attracting unit capable of more reliably attracting fish eaters by providing one or a plurality of reflecting surfaces or reflectors capable of performing specular reflection of external light inside the main body portion of the lure while securing a space for providing other necessary mechanisms (for example, the center-of-gravity shift system) inside the main body portion of the lure, reducing attenuation at the time of reflection of the external light, enabling reflection with stronger luminance, and enabling formation of reflected light in various directions. More specifically, even in the lure equipped with another mechanism such as a center-of-gravity shift system, since the other mechanism (such as the center-of-gravity shift system) and the reflecting surface or the reflector capable of performing specular reflection can be arranged in the same cavity of the main body portion of the lure, it is possible to provide the lure comprising the attracting unit capable of more reliably attracting the fish eaters by enabling formation of reflected light with stronger luminance in various directions while effectively utilizing the limited space.

Here, the reflecting surface 6 or the reflector 7 described above performs specular reflection, and therefore the reflecting surface thereof is formed on a plane that satisfies the law of reflection (in reflection, an incidence angle and a reflection angle are equal to each other, and have opposite signs) (the same applies throughout the present specification). Here, the external light enters from various directions, and sunlight reaching the water from above the water surface is mainly considered. Such external light (incident light) enters in an up-down (vertical) direction or an oblique direction from above the water surface toward the lure in the water. To attract the fish eaters, it is desirable that the lure reflects performs specular reflection of light roughly in a right and left (lateral) direction or an oblique lateral direction of the lure. In this regard, the lure is designed to make a predetermined movement during actual fishing, and in a case where the reflecting surface 6 or the reflector 7 that performs specular reflection is disposed, the reflecting surface 6 or the reflector 7 can be disposed at an appropriate position in consideration of an assumed movement of the lure (also referred to as a lure action) in advance, which is not intended to be limited to a specific position or orientation. Note that it can be said that when a large number of reflecting surfaces of the reflecting surfaces 6 or the reflectors 7 are provided in order to perform specular reflection in a multi-direction, an efficiency of reflecting incident light within an appropriate range (in an appropriate direction) is increased. However, it is to be noted that when the lure action is rolling, even a single reflecting surface 6 or reflector 7 can effectively reflect light within an appropriate range (in an appropriate direction).

Herein, the term "specular reflection" is defined as "reflection that satisfies the law of reflection (in reflection, an incidence angle and a reflection angle are equal to each other, and have opposite signs)". Since the reflected light has higher luminance compared to normal diffuse reflection, it is known that the intensity of the reflected light can be significantly enhanced by enabling the specular reflection of external light, which results in long-distance transmission of the reflected light (the same applies throughout the present specification). In addition, the specular reflection and the diffuse reflection vary in luminance with various conditions, but under the same condition, the luminance of the diffuse reflection is approximately 1/5 or less of that of the specular reflection. In the present invention, note that "specular reflection" does not only include ideal specular reflection but also includes reflection having luminance equal to 40% or more of the luminance of ideal specular reflection (referred to as "quasi specular reflection" herein). Here, the reflecting surface 6 or the reflector 7 performs specular reflection as described above, and therefore the reflecting surface of the reflecting surface 6 or the reflector 7 is formed on a plane that satisfies the law of reflection (in reflection, an incidence angle and a reflection angle are equal to each other, and have opposite signs) (the same applies throughout the present specification). In addition, in a case where the reflecting surface or the reflector is provided in the cavity, in a process until light from the outside is specularly reflected by the reflecting surface or the reflector provided in the cavity, a part of the light from the outside is transmitted through the main body portion, and since the light is diffusely transmitted when reaching the cavity, incident light that enters the cavity is diffused in various directions, and specularly reflecting a large amount of such incident light by the reflecting surface or the reflector in the cavity allows even relatively weak incident light to be reliably reflected with higher luminance by reducing attenuation at the time of reflection and also allows the reflected light to be reflected in a wider range direction. In addition, such transmitted light can form light accompanied by coloring as described later in the process of entering the transmitting object and emitting the reflected light to the outside, and the light reflected in this manner can be reliably reflected with higher luminance by reducing the attenuation at the time of reflection as reflected light accompanied by color development.

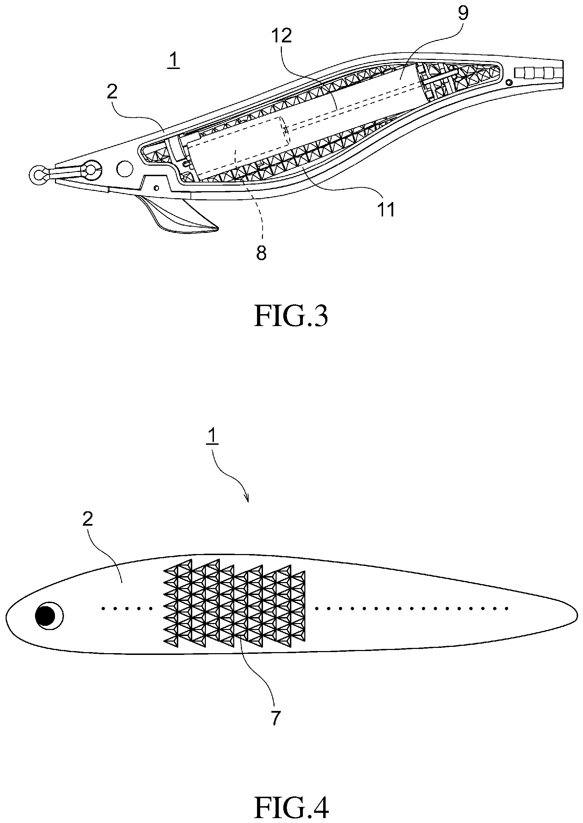

Next, with reference to FIG. 3, the lure 1 for fishing according to one embodiment of the present invention will be described. As illustrated in FIG. 3, the lure 1 for fishing according to one embodiment of the present invention comprises the main body portion 2 having the cavity 11 therein; the weight 8 provided in the cavity 11 of the main body portion 2 and movable in the cavity 11; and the hollow cover member 9 provided in the cavity 11 of the main body portion 2, covering the weight 8 from the outer side (outer side in the radial direction), and being capable of guiding the weight 8 to the inner side (inner side in the radial direction), in which the cavity 11 is partially or entirely visually recognizable from the outside, one or a plurality of reflecting surfaces 6 (aspect of FIG. 3) or reflectors 7 capable of performing specular reflection of light from the outside is provided on the outer surface 9a of the hollow cover member 9, a shaft member 12 is provided in the cover member 9 along the extending direction thereof, and the shaft member 12 is configured to guide the weight 8 by being inserted through the weight 8. In addition, in the lure 1 for fishing according to one embodiment of the present invention, the shaft member 12 may be provided to extend along a central axis X so as to be concentric with the cover member 9 and the weight 8, for example. In addition, as illustrated in FIG. 2, the weight 8 may be guided by the inner surface of the cover member 9. At this time, the weight 8 may be formed in a shape that rolls and slides along the inner surface of the cover member 9.

With the lure 1 for fishing according to one embodiment of the present invention, it is possible to provide the lure comprising the attracting unit capable of more reliably attracting fish eaters by providing one or a plurality of reflecting surfaces or reflectors capable of performing specular reflection of external light inside the main body portion of the lure while securing the space for providing other necessary mechanisms (for example, the center-of-gravity shift system) inside the main body portion of the lure, reducing attenuation at the time of reflection of the external light, enabling reflection with stronger luminance, and enabling formation of reflected light in various directions. More specifically, even in the lure equipped with another mechanism such as a center-of-gravity shift system, since the other mechanism (such as the center-of-gravity shift system) and the reflecting surface or the reflector 7 capable of performing specular reflection can be arranged in the same cavity of the main body portion of the lure, it is possible to provide the lure comprising the attracting unit capable of more reliably attracting the fish eaters by enabling formation of reflected light with stronger luminance in various directions while effectively utilizing the limited space. In addition, in a case where the mechanism related to the center-of-gravity shift system is provided, even when the diameter on the inner side of the cover member in the radial direction and the diameter on the outer side of the weight in the radial direction are slightly different, the weight can be more smoothly moved along the shaft member by providing the shaft member, so that the function of the center-of-gravity shift system can be more reliably exhibited. In addition, by utilizing the shaft member, weights of various sizes or shapes can be adopted for the cover member. In addition, since the weight is also moved along the shaft member, the weight can be moved more smoothly than in a case where the weight is moved only along the cover member.

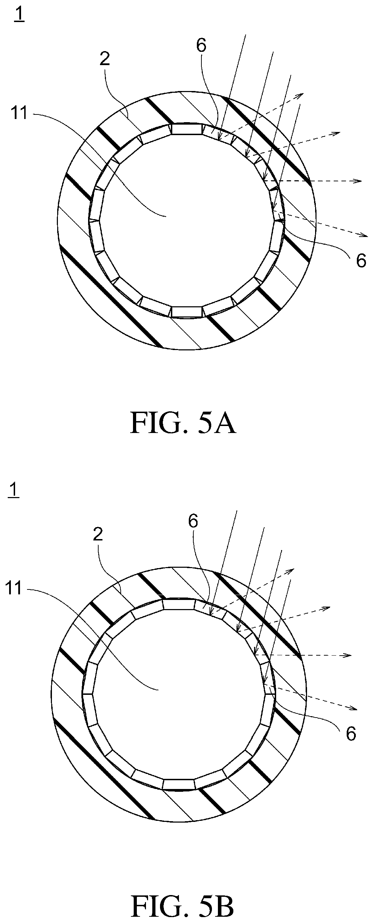

In addition, as illustrated in FIGS. 4 to 5B, the lure 1 for fishing according to one embodiment of the present invention comprises the main body portion 2 having the cavity 11 therein, the cavity 11 is partially or entirely visually recognizable from the outside, and one or a plurality of reflecting surfaces 6 (example illustrated in FIGS. 5A and 5B) or reflectors 7 (example illustrated in FIG. 4) capable of performing specular reflection of light from the outside is provided on at least one of the outer surface of the main body portion 2 or the inner surface of the main body portion 2 (the inner surface of the main body portion 2 in the illustrated example). In this manner, it is possible to provide the lure comprising the attracting unit capable of more reliably attracting fish eaters by reducing attenuation at the time of reflection of external light, enabling reflection with higher luminance, and enabling formation of reflected light in various directions. Here, FIG. 4 illustrates an aspect in which a plurality of reflectors 7 is provided on the inner surface of the main body portion 2 of the lure 1 for fishing according to one embodiment of the present invention. In addition, in FIG. 5A, the plurality of reflecting surfaces 6 is arranged on the inner surface of the main body portion 2 along the main body portion 2, and each reflecting surface is provided to be partially in contact with an adjacent reflecting surface. In FIG. 5B, the plurality of reflecting surfaces 6 is arranged on the inner surface of the main body portion 2 along the main body portion 2, and each reflecting surface is provided such that the entire side portion is in contact with the adjacent reflecting surface. Note that in a case where one or a plurality of reflecting surfaces 6 or reflectors 7 is provided, the one or the plurality of reflecting surfaces 6 or reflectors 7 and the main body portion 2 may be provided integrally or separately. Even in a case where the one or the plurality of reflecting surfaces 6 or reflectors 7 and the main body portion 2 are provided separately, the one or the plurality of reflecting surfaces 6 or reflectors 7 may be provided to be partially or entirety in contact with the main body portion 2 (the same applies throughout the present specification). Here, the reflecting surface 6 or the reflector 7 performs specular reflection as described above, and therefore the reflecting surface thereof is formed on a plane that satisfies the law of reflection (in reflection, an incidence angle and a reflection angle are equal to each other, and have opposite signs) (the same applies hereinafter).

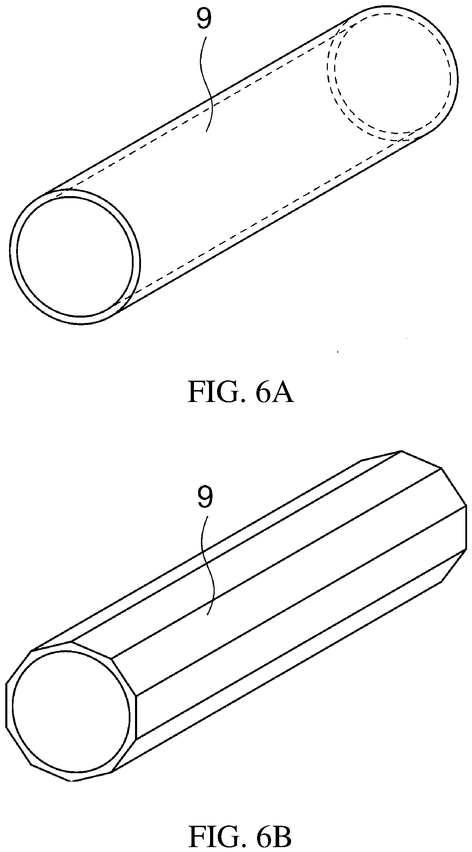

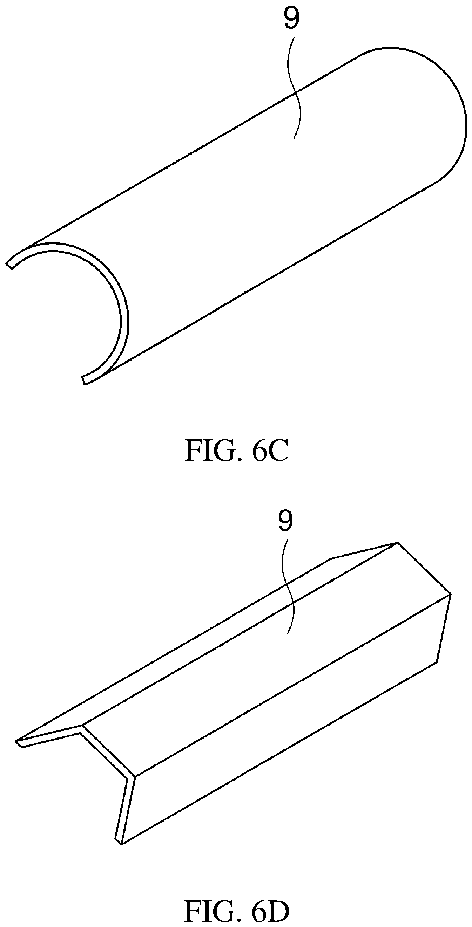

Next, the cover member 9 of the lure 1 for fishing according to one embodiment of the present invention will be described with reference to FIGS. 6A to 6D. In the lure 1 for fishing according to one embodiment of the present invention, the cover member 9 is formed in a columnar shape (in the case of FIG. 6A), a polygonal columnar shape (in the case of FIGS. 1, 2, and 6B), an arch shape (in the case of FIG. 6C), or a dome shape (in the case of FIG. 6D). However, in the case of the columnar shape or the polygonal columnar shape, the inside (inner side) is formed hollow. In this regard, since it can also be considered that a part of the inside (inner side) is hollow in the case of the arch shape or the dome shape, in the present specification, a member having an arch shape or a dome shape is also expressed as the hollow cover member 9. Here, the arch shape refers to a shape curved in a substantially arc shape (the angle of the arc is less than 360°), and the dome shape refers to a shape formed in a substantially arc shape (the angle of the arc is less than 360°) but configured by connecting a plurality of planes. In this manner, the external light incident on the inside of the main body portion of the lure can be efficiently reflected. That is, by changing the shape of the cover member in accordance with the shape of the inside of the main body portion of the lure, the lure that can efficiently perform reflection can be formed regardless of the shape and type of the lure. In addition, in a case where the shape of the cover member is a shape (an arch shape or a dome shape) of which a part is opened in a circumferential direction, it is sufficient to provide the reflecting surfaces only at the minimum necessary locations to reflect the external light. That is, in a case where external light from the sun coming from above (the upper direction) is assumed to be the main external light, even when such a reflecting surface is formed only in the upward direction (upper direction), it is possible to sufficiently reflect the reflected light with stronger luminance.

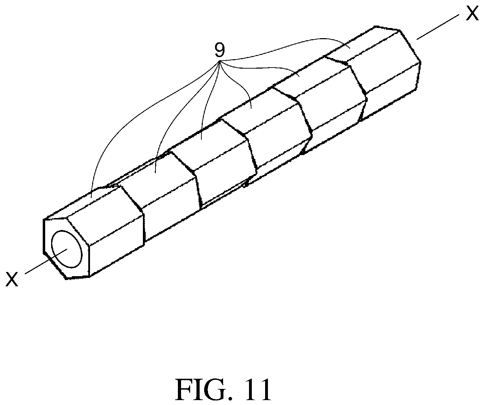

Next, the cover member 9 of the lure 1 for fishing according to another embodiment of the present invention will be described with reference to FIG. 11. In the lure 1 for fishing according to another embodiment of the present invention, the cover member 9 may have a shape of a plurality of polygonal columns. In the illustrated example, the cover member 9 is formed of six hexagonal columns, but the number and polygonal columns are not limited thereto, and various shapes can be considered. In addition, shapes of a plurality of polygonal columns may be configured using a plurality of types of polygonal columns (for example, a combination of a pentagonal column and a hexagonal column, and the like). In addition, as partially illustrated in FIG. 11, through-holes are formed in the plurality of polygonal columns of the cover member 9 along an axial direction (central axis X), whereby the inside (inner side) is formed hollow. In addition, each of the plurality of polygonal columns (six hexagonal columns in FIG. 11) of the cover member 9 may have various (uneven) angles (angles in the radial direction) about the axial direction (central axis X), and as a result, the orientations (angles) of the side surfaces of each of the plurality of polygonal columns (six hexagonal columns in FIG. 11) of the cover member 9 become uneven (irregular), so that the side surfaces of each of the plurality of polygonal columns (six hexagonal columns in FIG. 11) of the cover member 9 can efficiently reflect external light from multiple directions. Here, the cover member 9 of the lure 1 for fishing according to another embodiment of the present invention is formed as a single member, that is, a member in which a plurality of polygonal columns is integrated, but the cover member 9 may have another aspect (for example, an aspect of using a plurality of members of one polygonal column, or of using a plurality of members in which a plurality of polygonal columns is integrally formed).

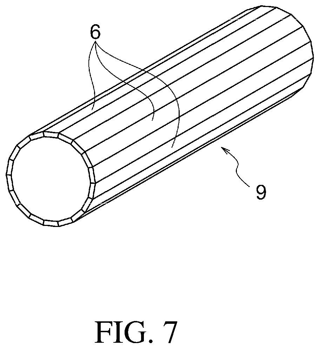

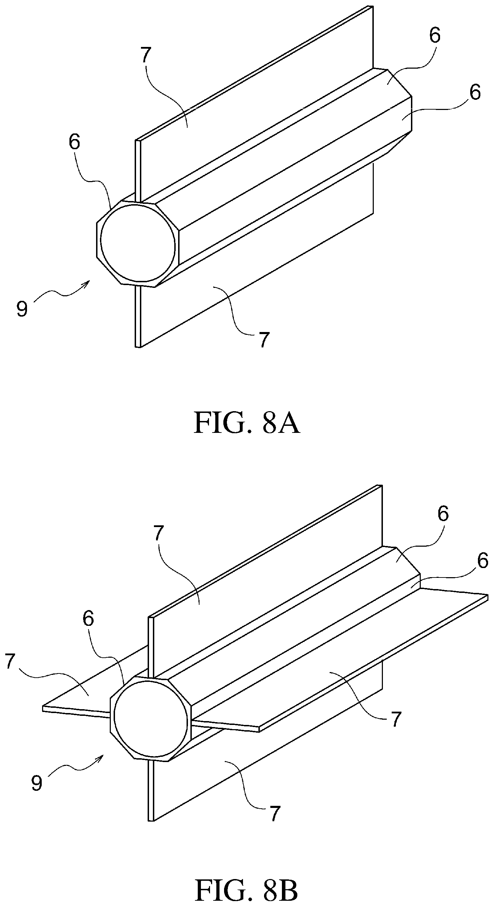

Next, the cover member 9 of the lure 1 for fishing according to one embodiment of the present invention will be described with reference to FIGS. 7 to 8B. First, as illustrated in FIG. 7, in the lure 1 for fishing according to one embodiment of the present invention, one or a plurality of reflecting surfaces 6 is provided on the outer surface of the cover member 9 along the circumferential direction of the cover member 9, and in a case where the plurality of reflecting surfaces 6 is provided, the reflecting surfaces 6 is provided at intervals from each other along the circumferential direction of the cover member 9. In this manner, by providing the reflecting surfaces at necessary locations of the cover member, it is possible to reliably and intensely attract carnivorous fishes by enabling reflection with strong luminance and enabling formation of reflected light in various directions while achieving space saving and cost reduction. In addition, in a case where a plurality of reflecting surfaces 6 is provided, the reflecting surfaces 6 may be provided in the entire circumferential direction without being provided at intervals from each other along the circumferential direction of the cover member 9. As illustrated in FIGS. 8A and 8B, in the lure 1 for fishing according to one embodiment of the present invention, one or a plurality of reflecting surfaces 6 and one or a plurality of reflectors 7 are provided on the outer surface of the cover member 9, and the reflector 7 is provided to protrude outward from the cover member. Here, in the example of FIG. 8A, two reflectors 7 are formed to extend in the up-down direction, and in the example of FIG. 8B, four reflectors 7 are formed to extend in each of the up-down direction and the right and left direction. Here, since external light (for example, sunlight) reaches the two reflectors 7 in the right and left direction from above, it is more preferable that the reflectors 7 are provided below (for example, a position closer to the reflector 7 directed in the downward direction than to the reflector 7 directed in the upward direction) the center position in the up-down direction. Thus, by providing the cover member having the reflecting surface and further providing the reflector to the cover member, it is possible to more reliably and intensely attract the carnivorous fishes by enabling reflection with strong luminance and enabling formation of reflected light in various directions. In addition, since the shape of the cover member can be changed in accordance with the shape of the inside of the main body portion of the lure by providing the reflector in a part of the cover member (that is, by forming a portion where the reflector is provided and a portion where the reflector is not provided), specular reflection can be more effectively performed by providing the reflector only at a necessary location.

In the lure for fishing according to one embodiment of the present invention, the cover member is formed linearly (for example, aspect illustrated in FIGS. 1 and 2) along the extending direction (longitudinal direction) thereof, or at least a part of the cover member is formed to be curved. In this manner, the shape of the cover member can be linear or curved in the longitudinal direction in accordance with the lures having various shapes. In addition, the cover member is for guiding the weight on the center-of-gravity shift system, and since the type of the lure is various and the shape is different, it is possible to apply the cover member to the lure having various shapes by making the shape of the cover member linear in the longitudinal direction and at least partially curved. Therefore, the shape of the weight that is moved inside the cover member may also be configured to allow movement accordingly and may be an appropriate shape to enable smooth movement of the weight.

In addition, in the lure 1 for fishing according to one embodiment of the present invention, in a case where one or a plurality of reflecting surfaces 6 or reflectors 7 is provided on the inner surface of the main body portion 2, in the one or the plurality of reflecting surfaces 6 or reflectors 7, a specular surface is formed by vapor deposition, plating, foil film, hologram sheet, metal adhesion, resin adhesion, or glass sheet adhesion, but these are not restrictive. In this manner, reflection efficiency is improved, for example, in use in a portion, such as the underside (lower surface) of the lure, where light from above the water surface easily enters, and stronger reflected light can be emitted, or weak incident light can also be reliably reflected.

In addition, in the lure 1 for fishing according to one embodiment of the present invention, the main body portion 2 is formed by using resin (for example, ABS, acrylic resin, or the like) or metal (for example, zinc, lead, tungsten, or the like). In addition, a part of the main body portion 2 may be formed by at least one of resin (for example, ABS, acrylic resin, or the like) or metal (for example, zinc, lead, tungsten, or the like).

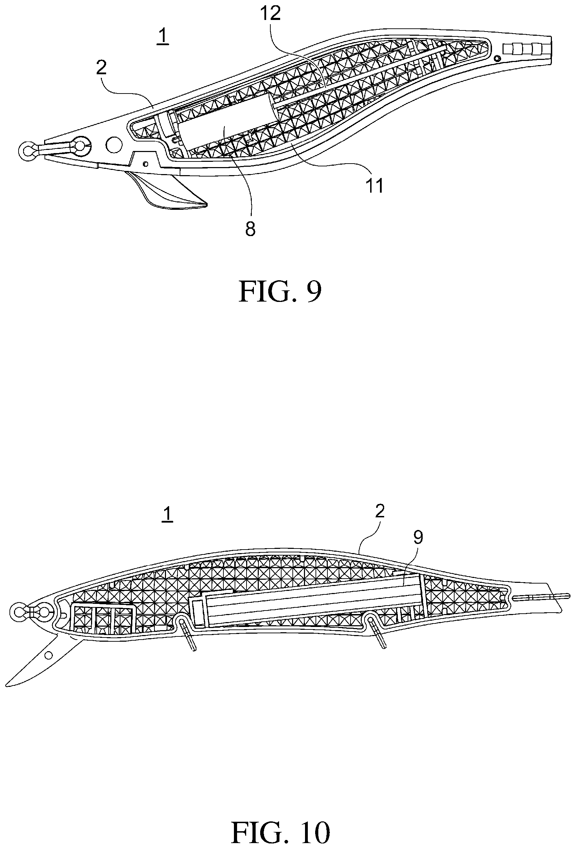

Next, the lure 1 for fishing according to another embodiment of the present invention will be described with reference to FIG. 9. As illustrated in FIG. 9, the lure 1 for fishing according to another embodiment of the present invention comprises the main body portion 2 having the cavity 11 therein; and the weight 8 provided in the cavity 11 of the main body portion 2 and movable in the cavity 11, in which the cavity 11 is partially or entirely visually recognizable from the outside, one or a plurality of reflecting surfaces 6 (aspect of FIG. 9) or reflectors 7 capable of performing specular reflection of light from the outside is provided on an outer surface 8a of the weight 8, a shaft member 12 is provided in the weight 8 along the extending direction thereof, and the shaft member 12 is configured to guide the weight 8 by being inserted through the weight 8. In this manner, with the lure 1 for fishing according to another embodiment of the present invention, it is possible to provide the lure comprising the attracting unit capable of more reliably attracting fish eaters by providing one or a plurality of reflecting surfaces or reflectors capable of performing specular reflection of external light inside the main body portion of the lure while securing the space for providing other mechanisms (for example, the center-of-gravity shift system) inside the main body portion of the lure, reducing attenuation at the time of reflection of the external light, enabling reflection with stronger luminance, and enabling formation of reflected light in various directions. Here, in the lure 1 for fishing according to another embodiment of the present invention, instead of the cover member, the weight itself may be provided with one or a plurality of reflecting surfaces 6 or reflectors 7 capable of performing specular reflection of light from the outside. In addition, instead of the weight, a plurality of rattle balls provided with one or a plurality of reflecting surfaces 6 or reflectors 7 capable of performing specular reflection of light from the outside on the surface may be used. Various aspects of the cover member described in the lure 1 for fishing according to one embodiment of the present invention described above can be basically applied in place of the weight.

Finally, the lure 1 for fishing according to another embodiment of the present invention will be described with reference to FIG. 10. The above-described lure 1 for fishing according to each embodiment of the present invention is not limited to a so-called squid lure for fishing as illustrated in FIGS. 1, 2, 3, and 9, and can be applied to a lure having various shapes, for example, can be applied to a lure 1 having a shape as illustrated in FIG. 10. Note that each member of the lure 1 illustrated in FIG. 10 is as described above, and will not be described here.

The dimension, material, and disposition of each component described in the present specification are not limited to those explicitly described in the embodiment, and each component can be modified to have any dimension, material, and disposition that are within the scope of the present invention. In addition, components not explicitly described in the present specification can also be added to the described embodiments, or some of the components described in the embodiments can be omitted.

### Reference Signs List

- 1: lure
- 2: main body portion
- 3: support member
- 6: reflecting surface
- 7: reflector
- 8: weight
- 9: cover member
- 11: cavity
- 12: shaft member

## Claims

1. A lure for fishing, comprising:
a main body portion having a cavity therein; and
a hollow cover member provided in the cavity of the main body portion,
wherein the cavity is partially or entirely visually recognizable from an outside, and one or a plurality of reflecting surfaces or reflectors capable of performing specular reflection of light from the outside is provided on an outer surface of the hollow cover member.

2. The lure according to claim 1, further comprising:
a weight in the cavity of the main body portion,
wherein the hollow cover member covers the weight from an outer side of the weight, and is capable of guiding the weight along an extending direction of the cover member, inside the hollow cover member along the extending direction.

3. The lure according to claim 2, wherein a shaft member is provided inside the cover member along the extending direction of the cover member, and the shaft member is capable of guiding the weight by being inserted through the weight.

4. The lure according to claim 3, wherein the shaft member is provided to extend along a central axis to be concentric with the cover member and the weight.

5. The lure according to claim 1, wherein the one or the plurality of reflecting surfaces or reflectors capable of performing specular reflection of light from the outside is provided on at least one of an outer surface of the main body portion or an inner surface of the main body portion.

6. The lure according to claim 1, wherein the cover member is formed in a columnar shape, a polygonal columnar shape, an arch shape, or a dome shape of which an inside is formed hollow.

7. The lure according to claim 1, wherein the one or the plurality of reflectors is provided on the outer surface of the cover member along a circumferential direction of the cover member, and in a case where the plurality of reflectors is provided, the reflectors are provided at intervals from each other along the circumferential direction of the cover member.

8. The lure according to claim 1, wherein the one or the plurality of reflectors is provided on the outer surface of the cover member, and the reflector is provided to protrude outward from the cover member.

9. The lure according to claim 1, wherein the cover member is formed linearly along an extending direction of the cover member, or at least a part of the cover member is formed to be curved.

10. The lure according to claim 5, wherein in a case where the one or the plurality of reflecting surfaces or reflectors is provided on the inner surface of the main body portion, the one or the plurality of reflecting surfaces or reflectors is formed by vapor deposition, plating, foil film, hologram sheet, metal adhesion, resin adhesion, or glass sheet adhesion.

11. The lure according to claim 1, wherein the main body portion is formed by resin or metal.
